(19) Europäisches Patentamt
European Patent Office
Office européen des brevets

(11) Publication number: 0 107 103 A2

# (12) EUROPEAN PATENT APPLICATION

(21) Application number: 83109778.7

(22) Date of filing: 29.09.83

(51) Int. Cl.³: B 29 G 3/00

(30) Priority: 30.09.82 US 430363

(43) Date of publication of application: 02.05.84 Bulletin 84/18

(84) Designated Contracting States: AT BE CH DE FR GB IT LI LU NL SE

(71) Applicant: UNION CARBIDE CORPORATION, Old Ridgebury Road, Danbury Connecticut 06817 (US)

(72) Inventor: Angell, Richard Gordon, 691 Carlene Drive, Bridgewater, N. J. 08807 (US)
Inventor: Hobbs, Kenneth Elton, 28 Baker Drive, Helmetta New Jersey 08828 (US)
Inventor: Konrad, John Martin, 524 Howard Avenue, Middlesex New Jersey 08846 (US)

(74) Representative: Barz, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)

(54) **A mold for producing elongated articles.**

(57) Described herein is a mold which is essentially air tight when air is evacuated therefrom and is able to withstand the high pressures used in some processes for fabricating thermoset resin articles. The mold comprises mold members each having an inner and outer surface for movement toward and away from one another along a mold axis, the inner surfaces of said members cooperating to present a cavity therebetween for receiving thermosetting organic material, the inner surface of one of the mold members carrying two sealing means the length of the inner surface and at the outer portion of such surface, said sealing means essentially parallel to one another, a top and bottom means each containing sealing means on the inner surface which communicate with the sealing means in the inner mold surface to form a seal around the cavity, when the mold members are closed, and a source of organic material communicating with the cavity.

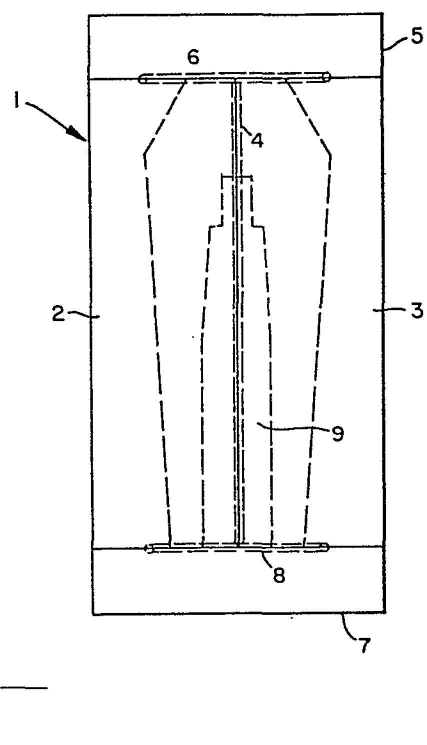


EP 0 107 103 A2

# A MOLD FOR PRODUCING ELONGATED ARTICLES

This invention is directed to a particular mold for producing elongated articles, particularly electrical parts such as bushings, insulators, and the like.

Due to the development of new processes for fabricating thermoset resin articles, the current state of the art molds are not entirely suitable for use in these processes. For example, in European Patent Application (D-13672) filed in the name of Union Carbide Corporation titled "A Process For Fabricating Thermoset Resin Articles" and filed on the same day as this application, a process is described for fabricating thermoset resin articles. Such process comprises the steps of: (a) providing in an accumulator zone, a liquid body of an epoxide containing organic material which is curable upon heating to a thermoset resin composition, the viscosity of said liquid body being maintained essentially constant in the accumulator zone by keeping its temperature below that at which curing of said materials is substantial, (b) providing a heated closed mold from which essentially all of the air has been removed from the cavity of said mold, (c) injecting at least a portion of said liquid body under pressure into the closed mold to fill the cavity in the mold, (d) initiating the curing of said materials by subjecting the materials to a temperature in the mold above the temperature at which the curing of said materials is initiated, (e) maintaining a pressure on the curing material, (f)

injecting additional of said materials to the mold cavity during the curing of said materials, and (g) opening said mold and removing the article therefrom.

In said process the mold is evacuated and resin is injected into the mold under pressure. Thus, there is a need for a mold which is essentially air tight and able to withstand the operating pressures of the process.

It has now been found that the mold as subsequently described is essentially air tight when air is evacuated therefrom and able to withstand the pressures used in fabricating thermoset resin articles.

The mold for producing elongated articles comprises mold members each having an inner and outer surface for movement toward and away from one another along a mold axis, the inner surfaces of said members cooperating to present a cavity therebetween for receiving thermosetting organic material, the inner surface of one of the mold members carrying two sealing means the length of the inner surface and at the outer portion of such surface said sealing means essentially parallel to one another, a top and bottom means each containing sealing means on the inner surface which communicate with the sealing means in the inner mold surface to form a seal around the cavity, when the mold members are closed, and a source of organic material communicating with the cavity.

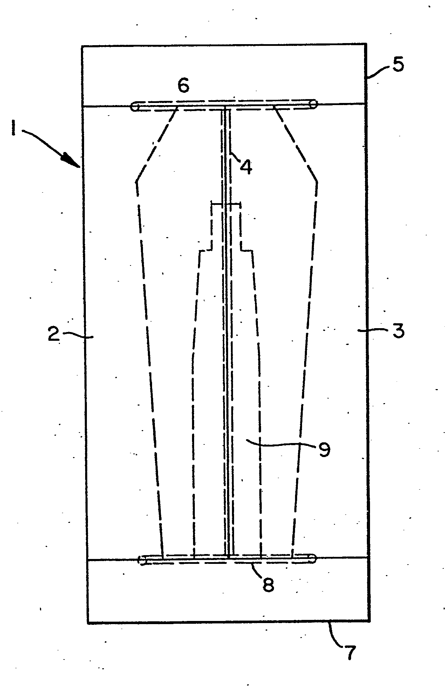

In order to facilitate the understanding of the aforementioned process, reference is made to the Figure herein which characterizes a specific

embodiment of the process and apparatus for practicing the process. It is not intended that the scope of the apparatus as hereinabove defined be restricted by the specific materials and equipment which are characterized in the Figure since it is intended for illustration purposes only.

The Figure shows a side view of closed mold 1, comprised of a left half 2, and right half 3. Grooves 4 and 4' contain an O-ring. The top plate 5 contains a circular groove which contains O-ring 6, which forms a seal with the O-ring contained in grooves 4 and 4'. The bottom plate 7 contains a circular groove which contains O-ring 8, which forms a seal with the O-ring contained in grooves 4 and 4'. A pin 9 sits inside the mold cavity (not shown) which allows the molding of a hollow article. The mold is filled through a valve (not shown).

As described above, the mold is particularly useful in the process described in European Patent Application (D-13672), supra.

In said process, as the first step, a liquid body of an epoxide containing organic material (composition) which eventually forms the thermoset resin matrix of the molded article is provided in an accumulator zone. This epoxide containing organic material is preferably the epoxide resin containing composition described in European Patent Application (13,653) filed in the name of Union Carbide Corporation titled "Curable Epoxy Resin Containing Molding Compositions"and filed on the same day as this application.

The curable epoxy resin containing compositions described in said European Patent Application (13,653) comprises an epoxide

resin, a polyol, a hardener and a particular catalyst.

The catalysts which are used in said composition are characterized by the performance of the formulation containing 60 percent by weight of the total formulation of aluminum trihydrate filler in which they are incorporated. The formulation containing the catalyst has a peak exotherm of 210°C or less, a time to peak exotherm 10.5 minutes or less in a mold at 150°C, and the time for the viscosity of the formulation to reach 3000 centipoise at 80°C is 30 minutes or greater or 60 minutes or greater for the formulation to reach a viscosity of 20,000 centipoise at 80°C. The catalysts suitable for use include one or more amines such as pyridine-N-oxide, 1,4-diazabicyclo [2.2.2] octane, 2-methyl-imidazole, 2-phenyl-imidazole, 1-vinyl-2-methyl imidazole, 1-acetyle imidazole, quaternary ammonium or phosphonium compounds such as n-propyl triphenyl phosphonium bromide benzyl triphenyl phosphonium bromide and chloride, n-heptyl triphenyl phosphonium bromide, ethyl triphenyl phosphenium bromide and iodide, n-hexyl triphenyl phosphonium bromide; diamines, such as bis(dimethylaminoethyl) ether, and the like.

The catalysts are used in amounts of from about 0.5 to about 10 parts by weight per 100 parts by weight of resin.

If the catalyst is a solid, it may be dissolved in a suitable solvent such as an alcohol or polyol. These include 2 ethyl 1,3-hexanediol, polycaprolactone polyols, diethylene glycol, triethylene glycol, methyl cellosolve, butyl

cellosolve, and the like.

The epoxide resins contain more than one 1,2-epoxide group per average molecule. The cycloaliphatic epoxides are preferred.

Suitable cycloaliphatic epoxides are those having an average of more than one vicinal epoxy group per molecule. The epoxy groups can be terminal epoxy groups or internal epoxy groups as exemplified by the cycloaliphatic epoxides which are subsequently described. Particularly desirable cycloaliphatic epoxides are the cyclohexane diepoxides, that is epoxides having at least one cyclohexane ring to which is attached at least one vicinal epoxy group.

Illustrative of suitable cycloaliphatic epoxides are the following:

FORMULA I

Diepoxides of cycloaliphatic esters of dicarboxylic acids having the formula:

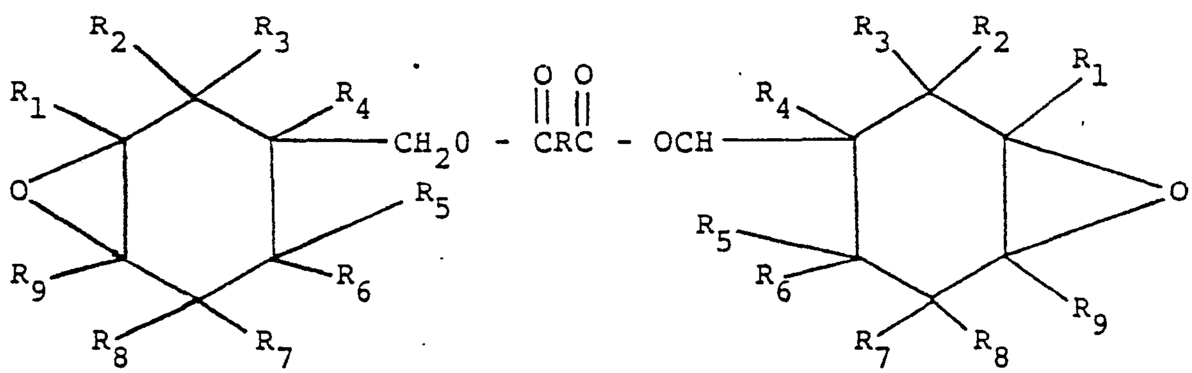

wherein $R_1$ through $R_9$, which can be the same or different are hydrogen or alkyl radicals generally containing one to nine carbon atoms inclusive and preferably containing one to three carbon atoms inclusive as for example methyl, ethyl, n-propyl, n-butyl, n-hexyl, 2-ethylhexyl, n-octyl, n-nonyl and

the like; R is a valence bond or a divalent hydrocarbon radical generally containing one to nine carbon atoms inclusive and preferably containing four to six carbon atoms inclusive, as for example, alkylene radicals, such as trimethylene, tetramethylene, pentamethylene, hexamethylene, 2-ethylhexamethylene, octamethylene, nonamethylene, and the like; cycloaliphatic radicals, such as 1,4-cyclohexane, 1,3 cyclohexane, 1,2-cyclohexane, and the like.

Particularly desirable epoxides, falling within the scope of Formula I, are those wherein $R_1$ through $R_9$ are hydrogen and R is alkylene containing four to six carbon atoms.

Among specific diepoxides of cycloaliphatic esters of dicarboxylic acids are the following:

bis(3,4-epoxycyclohexylmethyl)oxalate,
bis(3,4-epoxycyclohexylmethyl)adipate,
bis(3,4-epoxy-6-methylcyclohexylmethyl)adipate,
bis(3,4-epoxycyclohexylmethyl)pimelate,

and the like. Other suitable compounds are described in U.S. Pat. No. 2,750,395 to B. Phillips et al.

FORMULA II

A 3,4-epoxycyclohexylmethyl 3,4-epoxycyclohexane carboxylate having the formula:

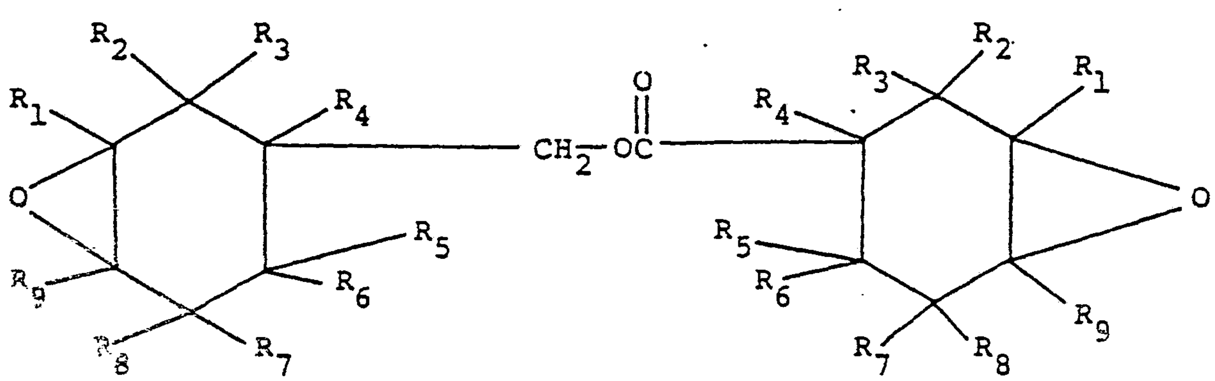

wherein $R_1$ through $R_9$ which can be the same or different are as defined for $R_1$ in formula I. Particularly desirable compounds are those wherein $R_1$ through $R_9$ are hydrogen.

Among specific compounds falling within the scope of Formula II are the following: 3,4-epoxycyclohexylmethyl, 3,4-epoxycyclohexanecarboxylate, 3,4-epoxy-1-methylcyclohexylmethyl, 3,4-epoxy-1-methylcyclohexylmethyl, 3,4-epoxy-1-methylcyclohexanecarboxylate, 6-methyl-3,4-epoxycyclohexylmethyl, 6-methyl-3,4-epoxycyclohexanecarboxylate, 3,4-epoxy-3-methylcyclohexylmethyl, 3,4-epoxy-3-methylcyclohexanecarboxylate, 3,4-epoxy-5-methylcyclohexylmethyl, 3,4-epoxy-5-methylcyclohexanecarboxylate. Other suitable compounds are described in U.S. Pat. No. 2,890,194 to B. Phillips et al.

<u>FORMULA III</u>

Diepoxides having the formula:

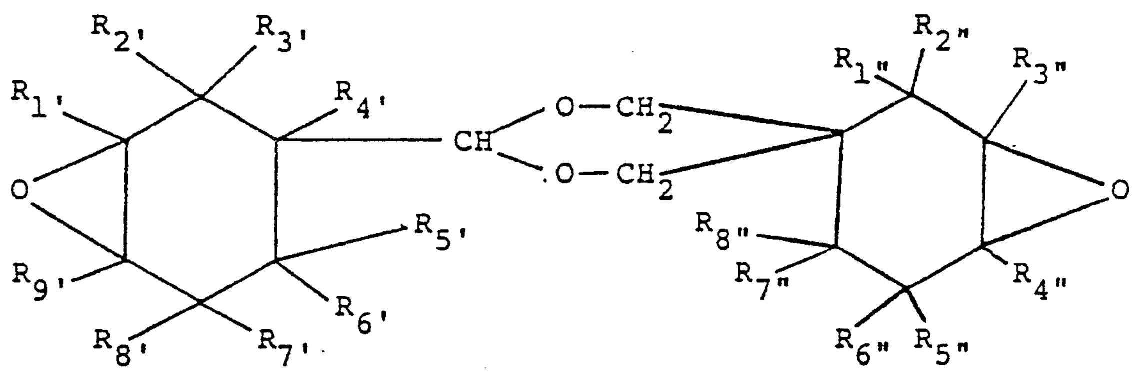

wherein the R single and double primes, which can be the same or different, are monovalent substituents such as hydrogen, halogen, i.e., chlorine, bromine, iodine or fluorine, or monovalent hydrocarbon radicals, or radicals as further defined in U.S. Pat. No. 3,318,822 to Hans Batzer et al. Particularly desirable compounds are those wherein

all the R's are hydrogen.

Other suitable cycloaliphatic epoxides are the following:

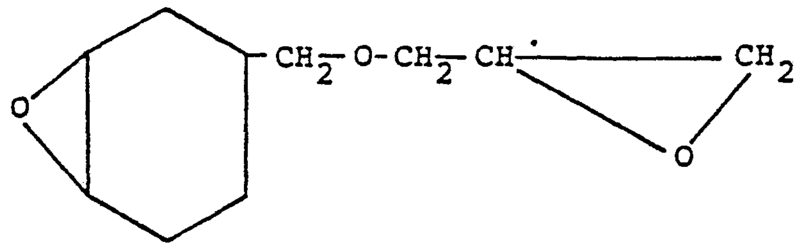

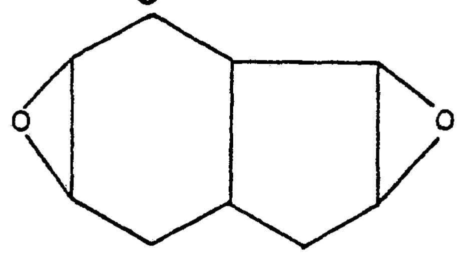

and the like.

The preferred cycloaliphatic epoxides are the following:

3,4-Epoxycyclohexylmethyl-3,4-Epoxycyclohexanecarboxylate

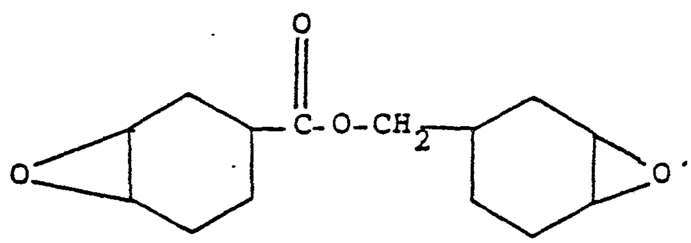

Bis-(3,4-Epoxycyclohexylmethyl) Adipate

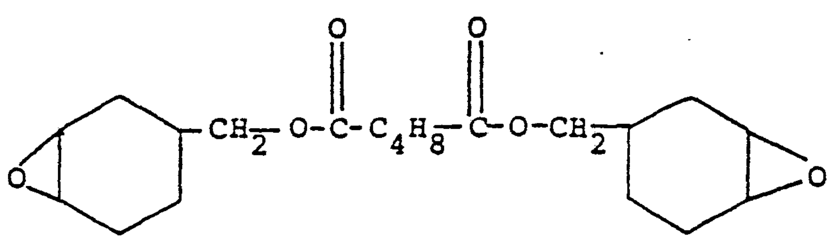

2-(3,4-Epoxycyclohexyl-5,
5-spiro-3,4-epoxy) cyclohexane-meta-dioxane

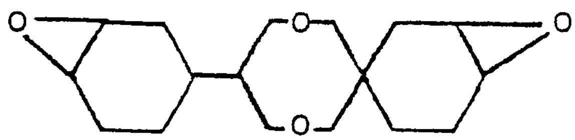

vinyl cyclohexane Dioxide

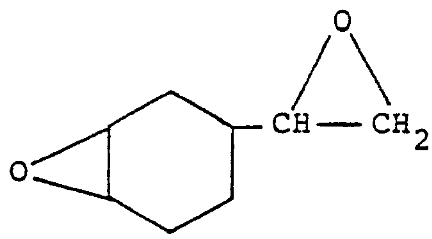

or mixtures thereof.

Epoxides with six membered ring structures may also be used, such as diglycidyl esters of phthalic acid, partially hydrogenated phthalic acid or fully hydrogenated phthalic acid. Diglycidyl esters of hexahydrophthalic acids being preferred.

Mixtures of epoxide resins may also be used.

The glycols suitable for use in this invention include polycaprolactone polyols as well as alkylene oxide adducts of polyhydroxyalkanes.

Illustrative of the polycaprolactone polyols that can be used one can mention the reaction products of a polyhydroxyl compound having from 2 to 6 hydroxyl groups with caprolactone. The manner in which these polycaprolactone polyol compositions are produced is shown in, for example, U.S. 3,169,945 and many such compositions are commercially available. In the following table there are listed illustrative polycaprolactone polyols. The first column lists the organic functional initiator that is reacted with caprolactone and the average molecular weight of the polycaprolactone polyol is shown in the second column.

Knowing the molecular weights of the initiator and of the polycaprolactone polyol one can readily determine the average number of molecules of caprolactone (CPL Units) that reacted to produce the compound; this figure is shown in the third column.

POLYCAPROLACTONE POLYOLS

| tiator | | Average MW of polyol | Average No. of CPL Units in molecules |
|---|---|---|---|
| 1 | Ethylene glycol | 290 | 2 |
| 2 | Ethylene glycol | 803 | 6.5 |
| 3 | Ethylene glycol | 2,114 | 18 |
| 4 | Propylene glycol | 874 | 7 |
| 5 | Octylene glycol | 602 | 4 |
| 6 | Decalence glycol | 801 | 5.5 |
| 7 | Diethylene glycol | 527 | 3.7 |
| 8 | Diethylene glycol | 847 | 6.5 |
| 9 | Diethylene glycol | 1,246 | 10 |
| 10 | Diethylene glycol | 1,998 | 16.6 |
| 11 | Diethylene glycol | 3,526 | 30 |
| 12 | Triethylene glycol | 754 | 5.3 |
| 13 | Polyethylene glycol (MW 200)* | 713 | 4.5 |
| 14 | Polyethylene glycol (MW 600)* | 1,396 | 7 |
| 15 | Polyethylene glycol (MW 1500)* | 2,868 | 12 |
| 16 | 1,2-Propylene glycol | 646 | 5 |
| 17 | 1,3-Propylene glycol | 988 | 8 |
| 18 | Dipropylene glycol | 476 | 3 |
| 19 | Polypropylene glycol (MW 425)* | 824 | 3.6 |
| 20 | Polypropylene glycol (MW 1000)* | 1,684 | 6 |
| 21 | Polypropylene glycol (MW 2000)* | 2,456 | 4 |
| 22 | Hexylene glycol | 916 | 7 |
| 23 | 2-Ethyl-1,3-hexanediol | 602 | 4 |
| 24 | 1,5-Pentanediol | 446 | 3 |
| 25 | 1,4-Cyclohexanediol | 629 | 4.5 |
| 26 | 1,3-Bis (hydroxyethyl)-benzene | 736 | 5 |
| 27 | Glycerol | 548 | 4 |
| 28 | 1,2,6-Hexanetriol | 476 | 3 |
| 29 | Trimethylolpropane | 590 | 4 |
| 30 | Trimethylolpropane | 761 | 5.4 |
| 31 | Trimethylolpropane | 1,103 | 8.5 |
| 32 | Triethanolamine | 890 | 6.5 |
| 33 | Erythritol | 920 | 7 |
| 34 | Pentaerythritol | 1,219 | 9.5 |

* = Average molecular weight of glycol.

The structures of the compounds in the above tabulation are obvious to one skilled in the art based on the information given. The structure of compound No. 7 is:

$$HO[(CH_2)_5\overset{O}{\overset{\|}{C}}O]_r CH_2CH_2OCH_2CH_2[O\overset{O}{\overset{\|}{C}}(CH_2)_5]_r OH$$

wherein the variable r is an integer, the sum of r + r has an average value of 3.7 and the average molecular weight is 527. The structure of compound No. 20 is:

$$HO[(CH_2)_5\overset{O}{\overset{\|}{C}}O]_r (C_3H_6O)_n C_3H_6[O\overset{O}{\overset{\|}{C}}(CH_2)_5]_r OH$$

wherein the sum of r + r has an average value of 6 and the average molecular weight is 1,684. This explanation makes explicit the structural formulas of compounds 1 to 34 set forth above.

Illustrative alkylene oxide adducts of polyhydroxyalkanes include, among others, the alkylene oxide adducts of ethylene glycol, propylene glycol, 1,3-dihydroxypropane, 1,3-dihydroxybutane, 1,4-dihydroxybutane, 1,4-1,5 - and 1,6-dihydroxyhexane, 1,2-, 1,3-, 1,4-, 1,6-, and 1,8-dihydroxyoctane, 1,10-dihydroxydecane, glycerol, 1,2,4,-trihydroxybutane, 1,2,6-trihydroxyhexane, 1,1,1,-trimethylolethane, 1,1,1,-trimethylolpropane, pentaerythritol, caprolactone, polycaprolactone, xylitol, arabitol, sorbitol, mannitol, and the like; preferably the adducts of ethylene oxide, propylene oxide, epoxybutane, or mixtures thereof. A preferred class of alkylene oxide adducts of polyhydroxyalkanes



BAD ORIGINAL

are the ethylene oxide, propylene oxide, or mixtures thereof, adducts of trihydroxyalkanes.

The preferred alkylene oxide adducts of polyhydroxyalkanes are of the following formula:

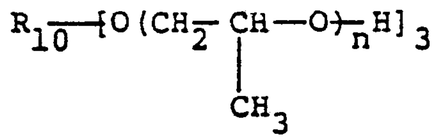

wherein $R_{10}$ is alkane of 3 to 10 carbon atoms, preferably 3 carbon atoms, and n is an integer of from about 4 to about 25.

It is customary to add appropriate hardeners to epoxide compositions to effect cure. Among suitable hardeners are the following:

1. polybasic acids having at least 2 carboxylic acid groups per molecule.

2. anhydrides of acids having at least 2 carboxylic acid groups per molecule.

Illustrative of suitable polybasic acids are the polycarboxylic acids of the formula:

$$HOOC-(CH_2)_f-COOH$$

wherein f is an integer generally having a value of from 1 to 20 inclusive, as for example, malonic, glutaric, adipic, pimelic, suberic, azelaic, sebacic and the like. Other examples of suitable acids are phthalic acid, isophthalic acid, terephthalic acid, hexahydrophthalic acid, and the like. Further acids are enumerated in U.S. Pat. No. 2,918,444 to B. Phillips et al.

Among other suitable polybasic acids, having at least two carboxylic groups per molecule, can be noted the following: tricarballylic acid, trimellitic acid and the like. Other such suitable polybasic acids, including polyesters thereof, are

described in U.S. Pat. No. 2,921,925 to B. Phillips et al.

Suitable anhydrides are the anhydrides of the acids listed above.

For purposes of stoichiometric calculations with respect to acids, one carboxyl group is deemed to react with one epoxy group; with respect to anhydrides, one anhydride group is deemed to react with one epoxy group.

Preferred hardeners include methyltetrahydrophthalic anhydride, hexahydrophthalic anhydride and methylhexahydrophthalic anhydride.

Other additives can be added to the compositions as is well known in the epoxy art. These additives include the following: modifiers such as dimer acid (made from unsaturated $C_{18}$ fatty acids and is a mixture of 3 percent mono basic acids, 75 percent dimer acid and 22 percent trimer acid and sold under the name of Empol 1022 by Emery Industries), a carboxyl terminated butadiene acrylonitrile (80-20) random copolymer having a molecular weight of about 3300; fillers such as clay, silica, aluminum trihydride, or mixtures thereof which may be coated with, for example, silanes, which fillers may be added in amounts of up to about 60 percent; pigments such as carbon black; mold release agents, and the like.

The compositions are prepared by simply mixing the epoxide, glycol, catalyst hardener and other ingredients at room or higher temperatures in a suitable container. Also, the epoxide and glycol may be mixed in one container and the hardener, catalyst and/or accelerator in another container and these two mixed.

The composition is then heated in order to effect its cure. The temperature to which the composition is heated to effect cure will, of course, vary and depend, in part upon the exact formulations of the composition. Generally, temperatures in the range of about 100°C to about 200°C are used for a period of time ranging from about 1 to about 6 hours.

The organic material is maintained in the accumulator zone (which may be more than one accumulator zone) at a temperature below the temperature which initiates substantial curing of the material in order to maintain its viscosity. Thereafter, the thermosettable organic material is injected into the heated mold to fill the mold cavity. The thermosettable organic material is heated in the mold to a temperature which is above the temperature at which cure of the thermosettable organic materials is initiated. Once the material cures, the mold is open and the molded article is removed therefrom. Curing is achieved typically within minutes and preferably with minutes.

The mold cavity is evacuated prior to injecting the epoxide containing organic material to remove essentially all of the air from the mold cavity. This allows the organic material to be added rapidly to the mold cavity without trapping air at the mold/resin interface.

It is important to prevent a degree of curing of the epoxy containing organic material before it is introduced into the mold which would significantly increase its viscosity. Premature curing of the organic material before it is introduced into the mold, could raise its viscosity undesirably high.

The mold employed herein is a heated mold which means that it has the capacity of being heated during the molding step. Heating is provided by heating jackets on the mold which are heated either by hot gases or hot liquids, and/or electric heaters can be inserted in the mold structure. Any one of these techniques are convenient and quite suitable in the practice of this invention. However, the mold can be cooled after the product is made and before it is removed from the mold. In this case, the mold is reheated when it is closed and prior to the next injection of the thermosettable liquid. There is no economic advantage in going through a cycle of mold heating and cooling. Thus, the preferred method of operation of the present process is to maintain the mold at a constant temperature throughout the various molding cycles. The temperature at which the mold is maintained is dependent upon the temperature at which the cure of the thermosettable organic materials supplied to the mold is initiated to produce a thermoset resin composition. The initiation temperature is the temperature at which the components of the thermosettable organic materials inter-react to effect an exothermic reaction which cures the materials to a thermoset resin.

The mold temperature which is sufficient to initiate reaction resulting in a thermoset resin is dependent upon the particular thermoset organic materials. These materials undergo curing at temperatures from about 100°C to about 200°C. In considering the exothermic temperature of the reaction, it is desirable to utilize a mold temperature which nominally exceeds the initiation temperature by at least 10-20°C, thus, insuring a

rapid initiation and a quick increase in the exotherm to produce a cured product in a minimum amount of time. Moreover, catalysts, initiators, etc, are generally added to the thermosettable materials. The type of catalyst or initiator, as well as any promoter or activator supplied therewith, will greatly determine mold temperature. The injection pressure, will vary from about 2 to about 40 atmospheres during the molding operation.

The resin composition undergoes shrinking during cure. Therefore after the resin in the mold has shrunken additional resin is injected into the mold at a pressure of from about 2 to about 30 atmospheres.

The mold is used for molding elongated articles, particularly electrical parts such as bushings, insulators and the like.

CLAIM:

A mold for producing elongated articles comprising mold members each having an inner and outer surface for movement toward and away from one another along a mold axis, the inner surfaces of said members cooperating to present a cavity therebetween for receiving thermosetting organic material, the inner surface of one of the mold members carrying two sealing means the length of the inner surface and at the outer portion of such surface, said sealing means essentially parallel to one another, a top and bottom means each containing sealing means on the inner surface which communicate with the sealing means in the inner mold surface to form a seal around the cavity, when the mold members are closed, and a source of organic material communicating with the cavity.

0107103

1/1